# EUROPÄISCHE PATENTSCHRIFT

(11) **EP 3 152 439 B1**
(45) Veröffentlichungstag und Bekanntmachung des Hinweises auf die Patenterteilung: **25.11.2020**
(21) Anmeldenummer: 15727623.9
(22) Anmeldetag: 01.06.2015
(51) Int. Cl.: F03G 3/08, F03D 9/10

(54) **ENERGIESPEICHER UND ENERGIESPEICHERSYSTEM**
ENERGY STORAGE DEVICE AND ENERGY STORAGE SYSTEM
ACCUMULATEUR D'ÉNERGIE ET SYSTÈME D'ACCUMULATEURS D'ÉNERGIE

(30) Priorität: 04.06.2014 DE 202014004799 U
(43) Veröffentlichungstag der Anmeldung: 12.04.2017
(73) Patentinhaber: Spinner, Christian, 10965 Berlin (DE)
(72) Erfinder: Spinner, Christian, 10965 Berlin (DE)
(74) Vertreter: PATERIS Patentanwälte PartmbB
(86) Internationale Anmeldenummer: PCT/EP2015/062161
(87) Internationale Veröffentlichungsnummer: WO 2015/185510

(56) Entgegenhaltungen:
- CN-A- 101 710 807
- DE-A1-102005 044 123
- FR-A1- 2 307 982
- FR-A1- 2 971 826
- FR-A1- 2 991 832
- US-A- 5 302 084
- US-B1- 8 253 268

## Beschreibung

Die vorliegende Erfindung betrifft einen Energiespeicher, bestehend aus einem sehr großen, spezifisch kostengünstigen Schwungrad und einem technischen Gesamtkonzept, das einen hohen System-Wirkungsgrad erlaubt, sowie ein hoch flexibles Energiespeichersystem.

Es ist bekannt, dass Schwungräder geeignet sind, Energie zu speichern. Seit der Erfindung des Schwungrads sind Anstrengungen unternommen worden, innerhalb eines definierten wirtschaftlichen Rahmens immer mehr Energie zu speichern sowie den Wirkungsgrad des Systems zu verbessern. Unter System ist nachstehend neben dem Schwungrad als Speichermedium auch die Art und Weise zu verstehen, wie dem Schwungrad Energie zugeführt, wie diese gehalten und anschließend wieder entzogen wird.

Die DE 10 2005 044 123 A1, die FR 2 307 982, die FR 2 991 832 und die CN 101710807 A beschreiben Schwungräder, die zumindest zum Teil aus Beton bestehen. Die in DE 10 2005 044 123 A1 und CN 101710807 A beschriebenen Schwungräder sind zumindest teilweise ins Erdreich eingelassen.

Aus FR 2 971 826 A1 ist Schwungrad bekannt, das an seiner Unterseite Walzen aufweist, die vertikale Kräfte aufnehmen. Oberhalb des Schwingrades befindet sich ein Motor/Generator, der mit einer sich durch das Zentrum des Schwingrades ersteckende Welle gekoppelt ist.

Aus US 5,302,084 A ist eine Windmühle mit einem von der Windmühle angeriebenen Schwungrad bekannt. Das Schwungrad läuft auf Rädern, die mit Generatoren verbunden, mit denen elektrische Energie erzeugt wird, die unmittelbar verwendet oder in einen Energiespeicher eingespeist werden kann.

Im Allgemeinen hängt die gespeicherte Energie in einem Schwungrad im Wesentlichen von drei Faktoren ab: der Masse und dem Radius des rotierenden Mediums sowie dessen Rotationsgeschwindigkeit. Der Wirkungsgrad ist abhängig von der Fähigkeit, Reibungs- und Wirkverluste im System zu verringern oder zu minimieren. Die Kosten ergeben sich aus den gewählten Materialien, dem Systemdesign und dem effizienten Zusammenspiel der Komponenten im gesamten Schwungsradsystem.

Die heutige Entwicklung versucht durch den Einsatz neuer Materialien hohe Rotationsgeschwindigkeiten jenseits von 50.000 U/min. zu erreichen oder die Reibungsverluste nahe Null zu bringen. Was bisher alle Schwungradspeicher vereint ist, dass nur relativ wenig Energie im Schwungrad gespeichert werden kann.

Gerade in der heutigen Zeit, in der immer mehr elektrischer Strom regenerativ erzeugt wird, kommt der Synchronisierung von Stromangebot und Stromnachfrage eine immer größere Bedeutung zu. Vor allem zunehmende Kapazitäten von weniger gut planbarer Wind- und Solarstromerzeugung erhöht das Erfordernis, eine Flexibilität (Puffer) im Stromsystem zu schaffen, so dass regional das Stromangebot und die - nachfrage für eine gewisse Zeit nicht synchron sein brauchen. Dafür gibt es zurzeit zwei Antworten: Neue Stromtransportleitungen, um überschüssigen bzw. fehlenden Strom ab- bzw. hintransportieren zu können, und Stromspeicher. Bei neuen Stromtransportleitungen scheitert es oft an der Akzeptanz der Bevölkerung, und Stromspeicher sind noch relativ klein und teuer.

Es ist daher eine Aufgabe der vorliegenden Erfindung, einen vorteilhaften Energiespeicher zur Verfügung zu stellen, der insbesondere einfach und günstig herzustellen ist. Eine weitere Aufgabe der Erfindung ist es, ein vorteilhaftes Energiespeichersystem zur Verfügung zu stellen. Diese Aufgaben werden durch einen Energiespeicher nach Anspruch 1 bzw. ein Energiespeichersystem nach Anspruch 13 gelöst. Die abhängigen Ansprüche enthalten vorteilhafte Weiterbildungen der Erfindung.

Ein erfindungsgemäßer Energiespeicher weist ein liegendes Schwungrad auf, das einen Massering aus Beton umfasst und wenigstens teilweise ins Erdreich eingelassen ist. Außerdem umfasst der Massering einen Stahlmantel, in den der Beton eingegossen ist. Der Stahlmantel erhöht die Randstabilität des Schwungrades und kann zudem beim Gießen des Schwungrades als Gießschale dienen. Der Stahlmantel kann dabei in eine Anzahl von Fächern unterteilt sein, in die jeweils der Beton (3) eingegossen ist. Dies bietet fertigungstechnisch den Vorteil, dass nur kleinere Volumina mit Beton ausgegossen zu werden brauchen. Der Beton des Schwungrades kann hierbei um ein Gerüst aus Bewehrungsstahl gegossen sein, um die Festigkeit des Schwungrades zu erhöhen. Der Massering ist auf Stahlrädern gelagert. Die Stahlräder laufen in Schienen, die an der Unterseite des Stahlmantels angeordnet sind. An den Stahlrädern sind zudem Motoren zum Antreiben des Schwungrades und/oder Generatoren zum Abbremsen des Schwungrades angeordnet.

Diese Lagerung hat mehrfachen Nutzen. Hauptsächlich soll sie die Last des Speichermediums tragen, damit es zu geringst möglichen Reibungswiderständen rotieren kann. Andererseits soll die Lagerung auch dazu genutzt werden, den Massering anzutreiben und abzubremsen. Letzteres wird dadurch erreicht, dass die Stahlräder einerseits Teile der Last tragen, andererseits aber über Motoren angetrieben und über Generatoren abgebremst werden können um Energie ein- oder auszuspeichern. Die Anzahl der Stahlräder sind abhängig von der Größe und der Masse des Speicherrings sowie der technischen Vorteilhaftigkeit und sollten idealerweise gleichmäßig unter dem Speichermedium verteilt sein.

In einer zweiten Ausgestaltung des erfindungsgemäßen Energiespeichers dient der Massering selbst als Rotor eines Motors/Generators. In diesem Fall umgibt der Stator den Massering ringförmig.

Ein Energiespeichersystem mit einem erfindungsgemäßen Energiespeicher ist ein Speicher für große Energiemengen mit hohen Wirkungsgraden. Er ist örtlich flexible einsetzbar und darüber hinaus relativ einfach und günstig zu bauen. Damit hebt er die Nachteile der heute gängigen Energiespeichersysteme auf, wie beispielsweise Pumpspeicherkraftwerke, Druckluftspeicher, Batterien oder die bisherigen Schwungräder. Aber auch teurer und unpopulärer Leitungsbau kann dadurch weitgehend vermieden werden.

Im erfindungsgemäßen Energiespeicher kann der Massering an seiner Umfangsfläche Luft- und/oder Gleitlager oder Stahlräder aufweisen. Die Luft- und/oder Gleitlager oder Stahlräder an der Umfangsfläche können für eine vertikale Stabilität des Masserings sorgen. Zudem können die Luft- und/oder Gleitlager oder Stahlräder auch Sensoren enthalten, um die Laufruhe des Schwungrades sicherzustellen.

In einer vorteilhaften Weiterbildung des erfindungsgemäßen Energiespeichers weist der Massering an seiner Unterseite eine Verbreiterung auf. Dadurch steht mehr Platz für die Lagerung der Motoren und der Generatoren sowie ein höheres Speichervolumen bei gleicher Drehzahl zur Verfügung. Die Verbreiterung kann dabei nach radial außen und/oder nach radial innen am Massering ansetzen. Wenn die Verbreiterung nach radial innen am Massering ansetzt, kann sie so groß sein, dass sie die Unterseite des Masserings verschließt.

Um viel Energie speichern zu können, weist der Massering bspw. einen Außenradius von mindestens 10 m, vorzugsweise mindestens 30 m und insbesondere mindestens 50 m und/oder eine Höhe von mindestens 5 m, vorzugsweise mindestens 10 m und insbesondere mindestens 20 m auf.

Um einen positiven Effekt auf Sicherheit und Stabilität des Energiespeichers zu erzielen, kann der Massering vollständig ins Erdreich eingelassen sein. Bei einem Defekt des Energiespeichers kann das Erdreich die Umgebung bspw. von Trümmerstücken schützen.

Ein erfindungsgemäßes Energiespeichersystem umfasst wenigstens eine regenerativen Energiequelle und einen erfindungsgemäßen Energiespeicher

Weitere Merkmale, Eigenschaften und Vorteile der Erfindung ergeben sich aus der nachfolgenden Beschreibung von Ausführungsbeispielen unter Bezugnahme auf die beiliegenden Figuren.
- Figur 1: zeigt ein Beispiel für einen erfindungsgemäßen Energiespeicher mit einem liegenden Schwungrad.
- Figur 2: zeigt die Anordnung von Schienen, Rädern und Lagern an der Unterseide des Schwungrades aus Figur 1.
- Figur 3: zeigt ein Beispiel für eine erste alternative Form des Schwungrades aus Figur 1.
- Figur 4: zeigt ein Beispiel für eine zweite alternative Form des Schwungrades aus Figur 1.
- Figur 5: zeigt ein erstes Beispiel für eine alternative Lagerung des Schwungrades aus Figur 1.
- Figur 6: zeigt ein zweites Beispiel für eine alternative Lagerung des Schwungrades aus Figur 1
- Figur 7: zeigt ein alternatives An- und Abtriebsdesign für das Schwungrad aus Figur 1

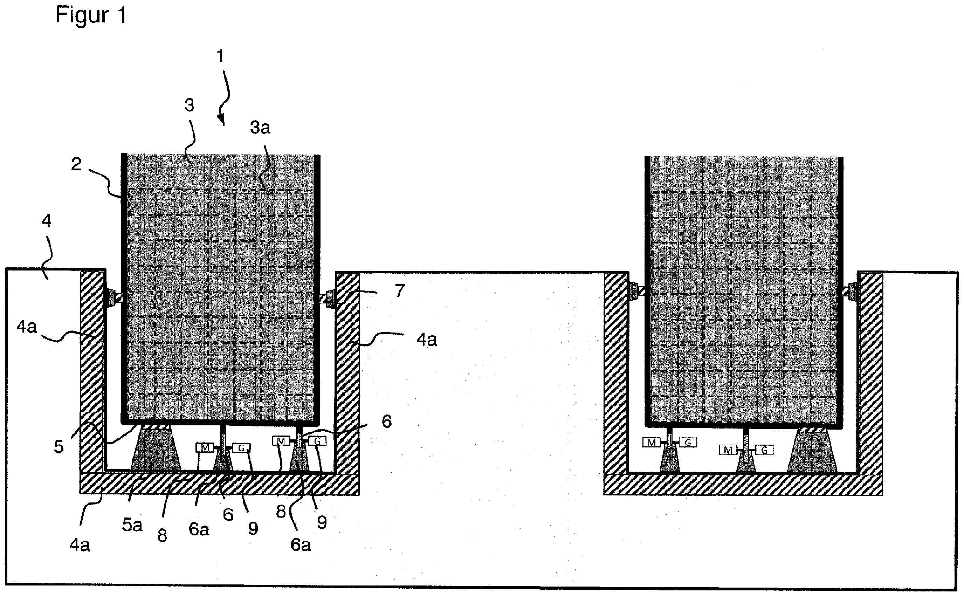

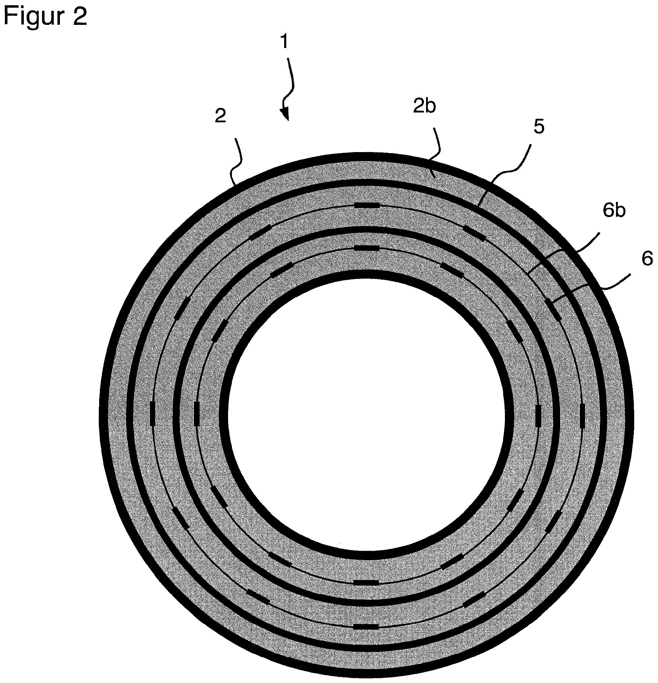

Ein erstes Ausführungsbeispiel für die vorliegende Erfindung wird nachfolgend mit Bezug auf die Figuren 1 und 2 beschrieben.

Die Erfindung umfasst ein System, das die Speicherung einer relativ großen Menge Energie (u. U. bis mehreren GWhₑₗ) zu relativ hohen Wirkungsgraden (u. U. über 90%) über eine relativ lange Zeitspanne (u. U. mehrere Stunden oder Tage) ermöglicht.

Der Kern der Erfindung ist ein großes, liegendes Schwungrad 1, wie es in Figur 1 im Längsschnitt skizziert ist. Das Schwungrad 1 ist liegend angeordnet, damit Schwingungen vermieden werden, die üblicherweise bei stehenden Schwungrädern auftreten. Es ist zudem idealerweise ins Erdreich 4 eingelassen, um einen positiven Effekt auf Sicherheit und Stabilität zu haben und ruht auf einem Fundament 4a. Das Schwungrad 1 dient im Rahmen der Erfindung als Speicherring zum Speichern von Energie.

Das formgebende Bauteil ist ein Stahlmantelring 2, dessen Wandstärke von der jeweiligen Größe des Schwungrads 1 abhängt. Er soll Stabilität bringen, insbesondere bei großen Radialgeschwindigkeiten. Der Stahlmantel wird mit Beton 3 aufgefüllt, das primäre, Masse gebende Material. Damit den bei der Rotation entstehenden Zugkräften standgehalten wird, wird der Beton 3 um ein Gerüst aus Bewehrungsstahl 3a gegossen. Die zur Verdeutlichung genannten Materialien können auch durch andere ersetzt werden. Statt der Verwendung eines Stahlmantelringes besteht auch die Möglichkeit, ein oder mehrere Stahlbänder bzw. Stahlgurte zu verwenden.

Der Massering wird mehrfach und unterschiedlich gelagert, darunter Luft- und/oder Gleitlager 5 sowie Stahlräder 6, die auf stabilen Fundamenten 5a, 6a montiert sind. An den Stahlrädern 6 sind Motoren 8 und/oder Generatoren 9 angebracht. Für die vertikale Stabilität sind Stabilisatoren 7 vorgesehen, die entweder Luft- und/oder Gleitlager oder auch Stahlräder sein können. Diese sollen auch Sensoren enthalten, die für die Sicherstellung der Laufruhe benötigt werden.

Die Lagerung hat mehrfachen Nutzen. Hauptsächlich soll sie die Last des Speichermediums, also des Schwungrades 1, tragen, damit es mit geringstmöglichen Reibungswiderständen rotieren kann. Andererseits soll die Lagerung auch dazu genutzt werden, um das Schwungrad 1 anzutreiben und abzubremsen. Letzteres wird dadurch erreicht, dass Stahlräder 6 einerseits Teile der Last tragen, andererseits aber über Motoren 8 angetrieben und über Generatoren 9 abgebremst werden können, um Energie ein- oder auszuspeichern. Die Stahlräder 6 laufen auf geeigneten Schienen 6b, die auf der Unterseite 2b des Stahlmantels 2 angebracht sind (vgl. Figur 2). Die Anzahl der Luft-/Gleitlager 5 und der Stahlräder 6 sind abhängig von der Größe und der Masse sowie on der technischen Vorteilhaftigkeit des Schwungrades 1 und sollten idealerweise gleichmäßig unter dem Schwungrad 1 verteilt sein.

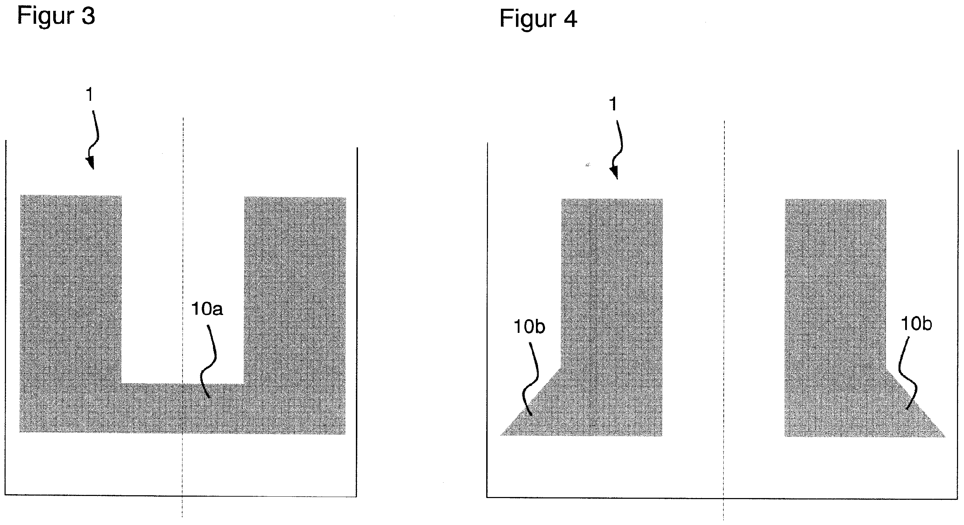

Alternative Formen des Speicherrings sind in den Figuren 3 und 4 dargestellt. In den dargestellten Formen weist das Schwungrad 1 an seiner Unterseite eine Verbreiterung 10a, 10b in Radialrichtung auf. Dadurch steht mehr Platz für die Lagerung der Motoren und Generatoren zur Verfügung. In der in Figur 3 dargestellten Form weist das Schwungrad 1 an seiner Unterseite eine sich nach radial innen erstreckende Verbreiterung 10a auf. In diesem Fall kann die Verbreiterung so groß sein, dass sie die Unterseite des Schwungrades 1 verschließt, wie dies bei dem in Figur 3 dargestellten Schwungrad der Fall ist. Die Verbreiterung 10b kann jedoch statt nach radial innen auch nach radial außen am Schwungrad 1 ansetzen, wie dies in Figur 4 dargestellt ist.

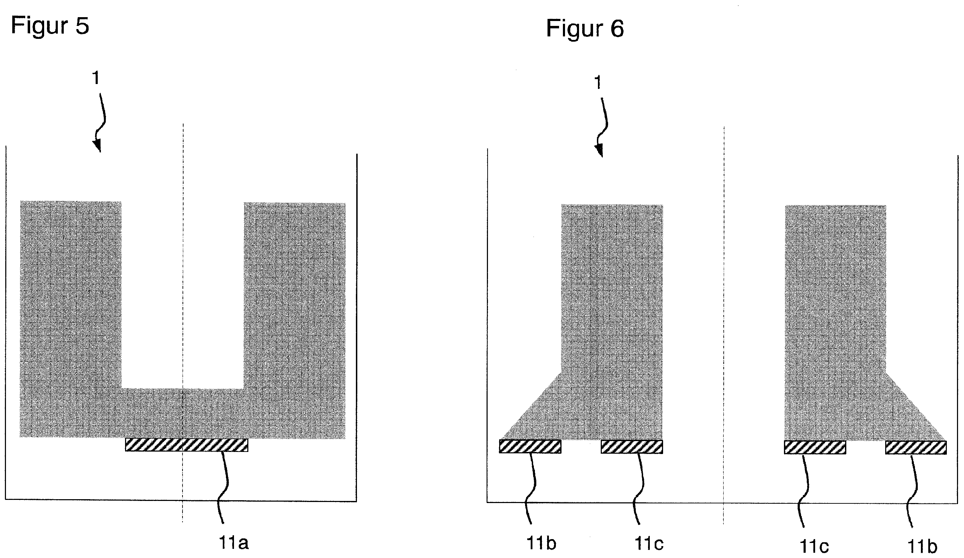

Die in den Figuren 3 und 4 dargestellten Schwungräder können auch im Vergleich zu dem in Figur 1 gezeigten Schwungrad alternative Lagerungen aufweisen. Diese sind am Beispiel von Gleitlagern 11a, 11b, 11c in den Figuren 5 und 6 gezeigt.

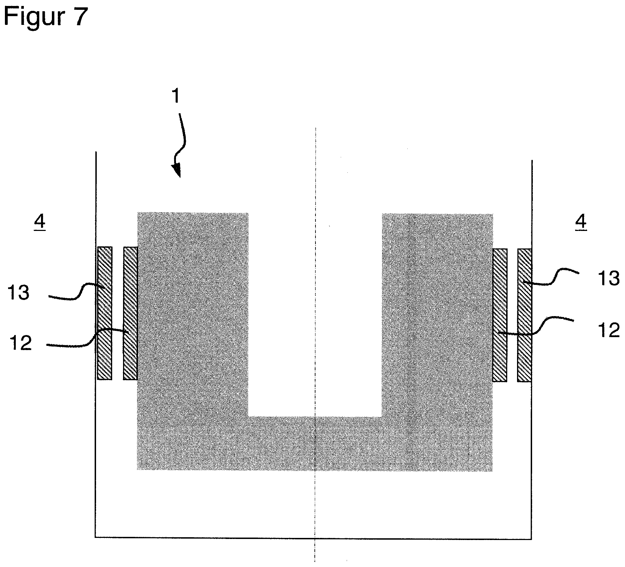

Ein alternatives An- und Abtriebsdesign ist in Figur 7 dargestellt. In diesem dient das gesamte Schwungrad 1 nicht nur als Speicherring, sondern auch als Rotor des Motors und des Generators. In Figur 7 sind schematisch die Rotorwicklung 12 am Schwungrad 1 und die Statorwicklung 13, die sich im Bereich des umgebenden Erdreiches 4 befindet, dargestellt. Da der gesamte Speicherring in dieser Ausgestaltung als Rotor des Motors und des Generators dient, kann die Lagerung auf Stahlrädern überflüssig sein und kann daher entfallen.

Im Gegensatz zu herkömmlichen Schwungrädern charakterisiert sich das erfindungsgemäße Schwungrad in einem großen Umfang, hoher Masse und kostengünstigem Material. Der rotierende Körper des erfindungsgemäßen Schwungrads kann folgende Merkmale haben:
▪ Die Erscheinungsform ist ein Ring
▪ Er hat einen relativ großen Innen- und Außendurchmesser (bspw. >50 m)
▪ Die Höhe des Rings hängt von der gewünschten Masse ab (bspw. >20 m)
▪ Das Masse gebende Material ist Stahlbeton oder eine ähnlich feste und schwere Materie
▪ Der Stahlbetonring ist mit einem U-förmigen Stahlmantel eingearbeitet

Ein Schwungrad mit einem Durchmesser von 50 m, einer Ringstärke von 25 m und einer Höhe von 30 m wiegt etwa 440.000 t. Bei einer Rotationsgeschwindigkeit von 40 U/min. kann dieses Schwungrad eine kinetische Energie von etwa 1 GWh Stromäquivalent speichern (entspricht einem jährlichen Stromverbrauch von mehr als 250 Haushalten in Deutschland).

Eine Herausforderung dabei ist die Lagerung des rotierenden Mediums. Angestrebt ist eine Mischung verschiedener Lager. Wichtig sind jedoch Stahlräder 6, auf denen das Schwungrad 1 liegt. An deren Achsen befinden sich Motoren 8 und Generatoren 9, die das Schwungrad 1 beschleunigen bzw. abbremsen um Energie ein- bzw. auszuspeichern.

Die Dimension des Speichermediums ist so groß, dass unterschiedliche Komponenten (Motoren 8, Generatoren 9) gleichzeitig verwendet werden können. So können Gleich- und Wechselstrom-Komponenten gleichzeitig verwendet werden, oder Komponenten, die an unterschiedlichen Spannungsebenen hängen; ganz nach den Bedürfnissen des Marktes und/oder einzelner Kunden. Unterschiedliche In- und Outputbedarfe lassen sich über dasselbe Speichermedium bedienen. Das macht das Speichersystem effizient, wirkungsvoll und skalierbar.

Die Erreichung des hohen Systemwirkungsgrades wird mit zusätzlichen, eigens dafür zu bauenden Energiequellen, die insbesondere regenerative Energiequellen sein können, innerhalb des Systems erreicht, die Wirkungsgradverluste abfedern, bestenfalls komplett kompensieren. Der regenerativ erzeugte Strom treibt Motoren an, die das Schwungrad 1 auf der nach der Energieeinspeicherung erreichten Rotationsgeschwindigkeit halten soll. Im Idealfall/Maximalfall ist dadurch ein Systemwirkungsgrad von 100% erreichbar. Mit der zusätzlichen Energiequelle können Reibungsverluste des rotierenden Schwungrades 1 ausgeglichen und so seine Drehzahl konstant gehalten werden. Wichtig zu erwähnen ist, dass die Energiequellen, bspw. regenerative Quellen, eigens für die Wirkungsgraderhöhung des Speichersystems gebaut werden; "Zusätzlichkeit" ist somit gegeben.

Die Erfindung bringt das Schwungrad 1 auf die Bühne der ernsthaft zu berücksichtigenden Stromspeichertechnologien mit attraktiven Anwendungsbereichen. So kann der erfindungsgemäße Speicher beispielsweise überschüssigen 50 Hz-Wind-Wechselstrom und Solar-Gleichstrom aufnehmen und zeitverzögert als 16,7 Hz-Bahnstrom wieder abgeben. Gleiches geht auch in der anderen Richtung, wenn beispielsweise die Bahn im größeren Umfang in ihren Zügen Systeme zur Energierückgewinnung einsetzt.

Der erfindungsgemäße Energiespeicher, insbesondere das rotierende Speichermedium, verzichten bewusst auf Hochtechnologie. Es werden Materialien verwendet die bereits längere Zeit marktreif und -gängig sind.

Dennoch, oder genau deswegen gibt es in diesem Energiespeicher Wirkverluste, die u. U. über dem der Schwungräder liegen könnten, die auf teure Hochtechnologien setzen. Diese Verluste sollen im Speichersystem abgefedert, bestenfalls sogar vollständig kompensiert werden: Eigens dafür erzeugte Energie, insbesondere regenerative Energie treibt das Schwungrad zusätzlich an, um Wirkungsverluste des Systems auszugleichen. Stellvertretend für diese Energiequellen sind Windkraftwerke oder Photovoltaik-Anlage zu nennen. In Abhängigkeit der Marktreife und Kosten, können Sterlingmotoren, ORC-Systeme (Organic Rankine Cycle) oder TEGs (Thermoelektrische Generatoren) verwendet werden, die Abwärme des Speichersystems zur Erzeugung von Strom nutzen.

Die besondere Art des Designs und der Lagerung des Speichermediums eröffnet die Möglichkeit, einen Multifunktions-Energiespeicher mit hoher Flexibilität zu bauen. Wofür man heute unterschiedliche Stromspeicher braucht um benötigte Stromprodukte anbieten zu können, ist beim erfindungsgemäßen Energiespeicher nur einer nötig. Im Besonderen liegt es an der beschriebenen Lagerung des Speichermediums auf Stahlrädern, an deren Achsen sich unterschiedliche Motoren und Generatoren anbauen lassen, die passgenau und effizient auf die Anforderungen des Marktes abgestimmt werden können:
▪ Passgenau im Sinne der Berücksichtigung heutiger und künftiger Stromprodukte. Es können dafür gezielt Motoren und Generatoren für den jeweiligen Bedarf eingebaut werden. Zur Verdeutlichung, hier ein denkbares Realbeispiel: Ein erfindungsgemäßer Energiespeicher befindet sich an einer Dreier-Schnittstelle von Bahnstromnetz, öffentlichen Stromnetz und dem Stromnetz eines großen Industriekunden, der mehrmals am Tag hohe Kapazitätsspitzen als Gleichstrom benötigt. Der Industriekunde kann nun über den Tag hinweg (überschüssigen) Strom aus den beiden anderen Kanälen (günstig) einkaufen und über geeignete Motoren den Energiespeicher füllen. Wenn er nun eine Kapazitätsspitze benötigt, zieht er diese direkt aus dem Energiespeicher mit seinem Gleichstromgenerator und vermeidet dadurch hohe Kosten für Kapazitätsvorhaltungen im öffentlichen Stromnetz .
▪ Effizient im Sinne einer optimalen Stückelung von Kapazitäten. Ist beispielsweise ein Energiespeicher der mit bis zu 100 MW elektrischer Leistung be- und entladen werden soll vorgesehen, dann kann eine optimale Stückelung von Motoren und Generatoren vorgenommen werden. Um das zu verdeutlichen, hier ein Beispiel: Angenommen der höchste Wirkungsgrad mit dem besten Preis-Effizienz-Verhältnis wird mit einem 5 MW-Motor erzielt. Dann werden 20 solcher Motoren in das System eingebaut. Soll der Speicher nun drei Stunden 60 MW Strom einspeichern, fahren 12 Motoren drei Stunden in ihrem effizientesten Punkt. Gleiches gilt bei der Ausspeicherung von Energie für die Generatoren.

Das spezielle Design des rotierenden Speichermediums und dessen Lagerung ermöglichen, den erfindungsgemäßen Energiespeicher als wertvolles Puzzelteil der Energiewende in Deutschland oder in Energiesystem anderswo auf der Welt einzusetzen. Strom wird im großen Stil speicherbar und die Energiewirtschaft damit etwas einfacher.

### Bezugszeichenliste

- 1: Schwungrad
- 2: Stahlmantel
- 2b: Unterseite
- 3: Beton
- 3a: Bewehrungsstahl
- 4: Erdreich
- 4a: Fundament
- 5: Gleitlager
- 5a: Fundament
- 6: Stahlrad
- 6a: Fundament
- 7: Stabilisator
- 8: Motor
- 9: Generator
- 10a: Verbreiterung
- 10b: Verbreiterung
- 11a: Gleitlager
- 11b: Gleitlager
- 11c: Gleitlager
- 12: Rotorwicklung
- 13: Statorwicklung

## Patentansprüche

1. Energiespeicher mit einem liegenden Schwungrad (1), bei dem
- das Schwungrad (1) einen Massering aus Beton (3) umfasst und wenigstens teilweise ins Erdreich (4) eingelassen ist,
- der Massering in einen Stahlmantel (2) umfasst, in den der Beton (3) eingegossen ist,
**dadurch gekennzeichnet, dass**
- der Massering auf Stahlrädern (6) gelagert ist,
- die Stahlräder (6) in Schienen (6b) laufen, die an der Unterseite (2b) des Stahlmantels (2) angeordnet sind und
- an den Stahlrädern (6) Motoren (8) zum Antreiben des Schwungrades (1) und Generatoren (9) zum Abbremsen des Schwungrades (1) angeordnet sind.

2. Energiespeicher nach Anspruch 1, **dadurch gekennzeichnet, dass** der Stahlmantel, in eine Anzahl von Fächern unterteilt ist, in die jeweils der Beton (3) eingegossen ist.

3. Energiespeicher nach einem der vorangehenden Ansprüche, **dadurch gekennzeichnet, dass** der Beton (3) um ein Gerüst aus Bewehrungsstahl (3b) gegossen ist.

4. Energiespeicher nach einem der vorangehenden Ansprüche, **dadurch gekennzeichnet, dass** der Massering als Rotor eines Motors/Generators dient und der Stator den Massering ringförmig umgibt.

5. Energiespeicher nach einem der vorangehenden Ansprüche, **dadurch gekennzeichnet, dass** der Massering an seiner Umfangsfläche Stabilisatoren (7) aufweist.

6. Energiespeicher nach Anspruch 5, **dadurch gekennzeichnet, dass** die Stabilisatoren als Luft- und/oder Gleitlager (7) oder Stahlräder ausgebildet sind.

7. Energiespeicher nach einem der vorangehenden Ansprüche, **dadurch gekennzeichnet, dass** der Massering an seiner Unterseite eine Verbreiterung (10a, 10b) aufweist.

8. Energiespeicher nach Anspruch 7, **dadurch gekennzeichnet, dass** die Verbreiterung (10b) nach radial außen am Massering ansetzt.

9. Energiespeicher nach Anspruch 7, **dadurch gekennzeichnet, dass** die Verbreiterung (10a) nach radial innen am Massering ansetzt.

10. Energiespeicher nach Anspruch 9, **dadurch gekennzeichnet, dass** die Verbreiterung (10a) die Unterseite des Masserings verschließt.

11. Energiespeicher nach einem der vorangehenden Ansprüche, **dadurch gekennzeichnet, dass** der Massering einen Außenradius von mindestens 10m und/oder eine Höhe von mindestens 5 m aufweist.

12. Energiespeicher nach einem der vorangehenden Ansprüche, **dadurch gekennzeichnet, dass** der Massering vollständig ins Erdreich (4) eingelassen ist.

13. Energiespeichersystem mit wenigstens einer Energiequelle und einem Energiespeicher nach einem der vorangehenden Ansprüche.

14. Energiespeichersystem nach Anspruch 13, in dem die Energiequelle eine regenerative Energiequelle ist.

## Claims

1. Energy storage device with a horizontally arranged flywheel (1), in which
- the flywheel (1) comprises a mass ring made of concrete (3) and which is at least partially embedded in the soil (4),
- the mass ring comprises a steel shell (2) into which the concrete (3) has been filled,
**characterized in that**
- the mass ring is mounted on steel wheels (6),
- the steel wheels (6) are running on rails (6b) which are arranged at the bottom (2b) of the steel shell (2) and
- motors (8) for driving the flywheel (1) and generators (9) for decelerating the flywheel (1) are arranged at the steel wheels (6).

2. Energy storage device according to claim 1, **characterized in that** the steel shell is divided into a number of compartments into which the concrete (3) has been filled respectively.

3. Energy storage device according to any one of the preceding claims, **characterized in that** the concrete (3) has been filled around a reinforcing steel structure (3b).

4. Energy storage device according to any one of the preceding claims, **characterized in that** the mass ring serves as the rotor of a motor/generator and the stator surrounds the mass ring in the form of a ring.

5. Energy storage device according to any one of the preceding claims, **characterized in that** the mass ring has stabilizers (7) on its peripheral surface.

6. Energy storage device according to claim 5, **characterized in that** the stabilizers are formed as air bearings and/or plain bearings (7) or steel wheels.

7. Energy storage device according to any one of the preceding claims, **characterized in that** the mass ring has a widening (10a, 10b) at its bottom.

8. Energy storage device according to claim 7, **characterized in that** the widening (10b) starts at the mass ring, extending in the radially outward direction.

9. Energy storage device according to claim 7, **characterized in that** the widening (10a) starts at the mass ring, extending in the radially inward direction.

10. Energy storage device according to claim 9, **characterized in that** the widening (10a) closes the bottom of the mass ring.

11. Energy storage device according to any one of the preceding claims, **characterized in that** the mass ring has an outer radius of at least 10 m and/or a height of at least 5 m.

12. Energy storage device according to any one of the preceding claims, **characterized in that** the mass ring is fully embedded in the soil (4).

13. Energy storage system comprising at least one energy source and one energy storage device according to any one of the preceding claims.

14. Energy storage device according to claim 13, in that the energy source is a regenerative energy source.

## Revendications

1. Accumulateur d'énergie doté d'un volant d'inertie horizontal (1), dans lequel
- le volant d'inertie (1) comprend une masse annulaire en béton (3) et est au moins partiellement encastré dans le sol (4),
- la masse annulaire comprend une enceinte en acier (2) dans laquelle est coulé le béton (3), **caractérisé en ce que**
- la masse annulaire est montée sur des roues en acier (6),
- les roues en acier (6) roulent sur des rails (6b) qui sont disposés sur la face inférieure (2b) de l'enceinte en acier (2), et
- des moteurs (8) pour entraîner le volant d'inertie (1) et des générateurs (9) pour ralentir le volant d'inertie (1) sont disposés sur les roues en acier (6).

2. Accumulateur d'énergie selon la revendication 1, **caractérisé en ce que** l'enceinte en acier est divisée en un nombre de compartiments dans lesquels le béton (3) est coulé respectivement.

3. Accumulateur d'énergie selon l'une quelconque des revendications précédentes, **caractérisé en ce que** le béton (3) est coulé autour d'une charpente en acier à béton (3b).

4. Accumulateur d'énergie selon l'une quelconque des revendications précédentes, **caractérisé en ce que** la masse annulaire sert de rotor pour un moteur/générateur et le stator entoure de façon circulaire la masse annulaire.

5. Accumulateur d'énergie selon l'une quelconque des revendications précédentes, **caractérisé en ce que** la masse annulaire présente des stabilisateurs (7) sur sa surface circonférentielle.

6. Accumulateur d'énergie selon la revendication 5, **caractérisé en ce que** les stabilisateurs sont réalisés sous forme de paliers d'air et/ou de paliers lisses (7) ou de roues d'acier.

7. Accumulateur d'énergie selon l'une quelconque des revendications précédentes, **caractérisé en ce que** la masse annulaire présente un élargissement (10a, 10b) sur sa face inférieure.

8. Accumulateur d'énergie selon la revendication 7, **caractérisé en ce que** l'élargissement (10b) est rapporté à la masse annulaire radialement vers l'extérieur.

9. Accumulateur d'énergie selon la revendication 7, **caractérisé en ce que** l'élargissement (10a) est rapporté à la masse annulaire radialement vers l'intérieur.

10. Accumulateur d'énergie selon la revendication 9, **caractérisé en ce que** l'élargissement (10a) ferme la face inférieure de la masse annulaire.

11. Accumulateur d'énergie selon l'une quelconque des revendications précédentes, **caractérisé en ce que** la masse annulaire présente un rayon extérieur d'au moins 10 m et/ou une hauteur d'au moins 5 m.

12. Accumulateur d'énergie selon l'une quelconque des revendications précédentes, **caractérisé en ce que** la masse annulaire est complètement encastrée dans le sol (4) .

13. Système d'accumulation d'énergie comprenant au moins une source d'énergie et un accumulateur d'énergie selon l'une quelconque des revendications précédentes.

14. Système d'accumulation d'énergie selon la revendication 13, dans lequel la source d'énergie est une source d'énergie à récupération.
